# FASCICULE DE BREVET EUROPEEN

(11) **EP 3 098 505 B1**
(45) Date de publication et mention de la délivrance du brevet: **16.05.2018**
(21) Numéro de dépôt: 16171344.1
(22) Date de dépôt: 25.05.2016
(51) Int. Cl.: F21V 7/00, B64D 47/08, F21V 23/04, F21V 29/70

(54) **DISPOSITIF D'ÉCLAIRAGE POUR AÉRONEF PERMETTANT L'INTÉGRATION EN SON CENTRE DE FONCTIONS ADDITIONNELLES**
FLUGZEUGLEUCHTE UND ZENTRALE INTEGRATION ZUSÄTZLICHEN FUNKTIONEN
AIRCRAFT LIGHTING DEVICE AND CENTRAL INTEGRATION OF ITS ADDITIONAL FUNCTION

(30) Priorité: 28.05.2015 FR 1554797
(43) Date de publication de la demande: 30.11.2016
(73) Titulaire: Zodiac Aero Electric, 93100 Montreuil (FR)
(72) Inventeur: MILLET, Philippe, 92370 CHAVILLE (FR); DOULE, Claude, 75019 PARIS (FR)
(74) Mandataire: Casalonga

(56) Documents cités:
- EP-A1- 2 116 756
- EP-A2- 2 574 837
- WO-A1-2013/094480
- US-A1- 2006 001 384
- US-A1- 2013 249 375
- US-A1- 2014 199 168

## Description

L'invention concerne, de manière générale, les dispositifs d'éclairage à diode électroluminescente (DEL) d'aéronef. Dans une application, l'invention se rapporte à un projecteur à DEL de type «take-off light» ou «landing light» ou encore à un projecteur de type «taxi light». En effet, un aéronef comprend généralement plusieurs dispositifs d'éclairage extérieur destinés chacun à l'éclairage d'une zone extérieure et qui sont activés en fonction des phases de vol ou de roulage de l'aéronef. Le système d'éclairage d'un aéronef est ainsi capable de proposer une fonction de roulage, généralement désignée par le terme anglo-saxon « taxi light », une fonction de décollage (« take-off light »), et une fonction d'atterrissage (« landing light »).

Toutefois, l'invention se rapporte également à un dispositif d'éclairage pour hélicoptère destiné à être utilisé en tant que projecteur de recherche et d'atterrissage.

Les projecteurs de décollage et d'atterrissage pour avion, c'est-à-dire les projecteurs connus par les termes anglo-saxons « take-off light » et « landing light », ainsi que les projecteurs de recherche et d'atterrissage pour hélicoptère sont extrêmement puissants afin de pouvoir disposer d'une portée suffisante, par exemple de l'ordre de 200 à 500 m pour pouvoir éclairer efficacement la piste, en ce qui concerne les projecteurs de décollage et d'atterrissage pour avion, ou le sol, en ce qui concerne les projecteurs de recherche et d'atterrissage pour hélicoptère. Ils sont ainsi généralement capables de fournir plusieurs centaines de milliers de candelas.

Comme on le conçoit, pour des applications aéronautiques, la taille des projecteurs, ainsi que l'intensité lumineuse qu'ils sont capables de fournir constituent des critères qui doivent être considérés lors de la conception des projecteurs.

La taille des projecteurs est généralement désignée par le nombre de PAR, qui désigne le diamètre du projecteur en 8^{ème} de pouce. Ainsi, la taille PAR 36 correspond à un diamètre de 4 pouces ½, soit 114 mm, PAR 46 correspond à un diamètre de 5 pouces ¾, soit 145 mm et PAR 64 correspond à un diamètre de 8 pouces, soit 203 mm.

Dans l'état de la technique, les projecteurs de décollage et d'atterrissage utilisés sur les avions de transport de passagers et sur certains hélicoptères et qui sont équipés d'une source halogène, sont généralement de gabarit PAR 64. Les systèmes d'éclairage récents utilisant des sources à diodes électroluminescentes ont un encombrement frontal similaire. Ils ont un diamètre d'environ 200 mm.

Classiquement, les projecteurs à DEL comportent un réflecteur présentant en coupe une section de forme générale parabolique, à l'intérieur duquel est monté un réseau de diodes électroluminescentes liées entre elles et disposées à proximité de l'axe focal de la parabole définie par le réflecteur.

On pourra à cet égard se référer au document WO 03/095894. Dans ce document, les diodes électroluminescentes sont orientées dans la direction à éclairer.

Il est également connu d'orienter les diodes perpendiculairement à la direction d'éclairage, comme décrit dans les documents EP 1 731 423, EP 2 450 279 et EP 2 131 104.

On pourra également se référer au document EP 1 077 344 qui décrit un dispositif d'éclairage comprenant des diodes électroluminescentes disposées en rangées.

On connaît également les documents EP 2 574 837, EP 2 116 756, US 2014/199168, US 2013/249375, US 2006/001384, et WO 2013/001384 décrivant des dispositifs d'éclairage à base de diodes électroluminescentes.

Au vu de ce qui précède, le but de l'invention est de proposer un dispositif d'éclairage pour aéronef à diodes électroluminescentes comprenant un nombre de diodes suffisant pour obtenir une puissance et donc une portée suffisante tout en permettant l'intégration d'un dispositif capable d'exercer une fonction additionnelle.

L'invention, décrite dans la revendication 1, a donc pour objet un dispositif d'éclairage d'aéronef comprenant un corps creux cylindrique, un ensemble de diodes électroluminescentes montées dans le corps creux et au moins un réflecteur recevant les faisceaux lumineux émis par les diodes et adapté pour les diriger selon la direction d'éclairage du dispositif.

Les diodes sont montées sur un support cylindrique de sorte que les diodes sont disposées de manière radiale dans le corps cylindrique.

Ainsi, en montant les diodes de manière radiale sur un support cylindrique, on peut dégager un espace au centre du corps creux dans lequel peut venir se loger un dispositif additionnel.

Un tel agencement permet également de réduire sensiblement l'encombrement général des sources lumineuses car il permet de densifier les DEL, c'est-à-dire d'en augmenter le nombre et, par conséquent, de dégager un volume qui peut être utilisé pour l'installation d'un radiateur capable de dissiper la chaleur dégagée par les diodes ou par leur carte électronique d'alimentation. On peut ainsi obtenir des performances similaires à celles d'un projecteur de plus grande taille.

Un tel espace peut aussi être utilisé pour placer dans le projecteur un dispositif capable d'assurer d'autres fonctions, tel qu'un détecteur d'obstacles ou une caméra. Suivant l'invention, le support cylindrique est un support cylindrique à contour polygonal. Il s'agit en d'autres termes d'un support cylindrique à base polygonale.

Dans ce cas, chaque côté du support cylindrique à contour polygonal comporte plusieurs diodes. Le support est un support annulaire, au moins un organe d'exécution d'une fonction additionnelle étant monté au centre du support annulaire Le dispositif d'éclairage comporte au moins un organe d'exécution d'une fonction additionnelle qui peut être choisi parmi une caméra, un radar ou un capteur.

On notera que l'organe d'exécution d'une fonction additionnelle est recouvert d'une glace transparente à un rayonnement émis et/ou détecté par ledit organe.

On pourra prévoir que la glace est équipée de moyens de dégivrage.

Dans un mode de réalisation, le support comporte une face antérieure comprenant un radiateur annulaire de dissipation d'énergie thermique, ledit radiateur étant annulaire ou en forme de disque.

Selon une autre caractéristique du dispositif selon l'invention, les diodes sont montées sur au moins un circuit imprimé fixé sur le support.

Dans un mode de réalisation, le dispositif comporte une carte électronique d'alimentation des diodes montées dans le corps.

Il peut par ailleurs comporter une glace annulaire recouvrant de manière étanche les diodes et le réflecteur.

Dans un mode de mise en oeuvre, le corps comporte une face postérieure pouvant comprendre un radiateur de dissipation d'énergie thermique.

De préférence, le dispositif comporte un ensemble d'éléments réfléchissant de révolution juxtaposés ayant une génératrice typiquement parabolique.

Dans un mode de réalisation, chaque diode est associée à un élément réfléchissant.

On peut par ailleurs prévoir que des éléments réflecteurs soient montés de manière inclinée par rapport à la direction d'éclairage du dispositif.

On peut enfin prévoir que les éléments réflecteurs sont en matière plastique injectée recouverte d'une couche d'aluminium réfléchissant la lumière.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en perspective d'un premier mode de réalisation d'un dispositif d'éclairage pour aéronef conforme à l'invention ;
- la figure 2 est une vue en coupe du dispositif d'éclairage de la figure 1 ;
- la figure 3 est une vue en perspective d'un projecteur pour aéronef selon un deuxième exemple de réalisation ; et
- les figures 4 et 5 sont des vues en coupe, selon deux plans perpendiculaires, du projecteur de la figure 3.

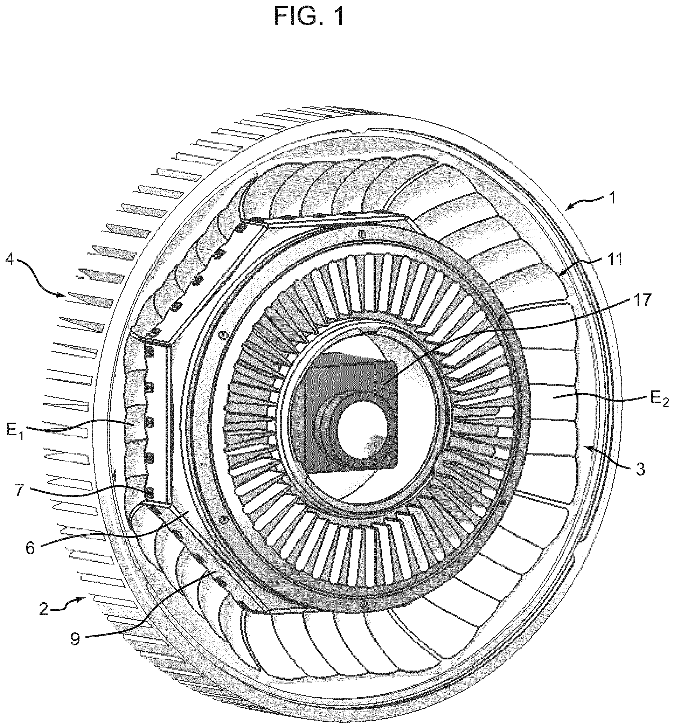

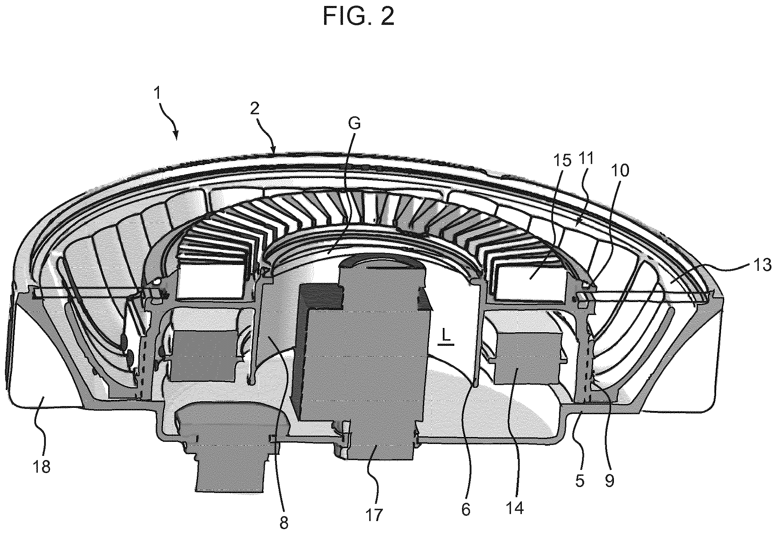

Sur les figures 1 et 2, on a représenté un dispositif d'éclairage à diodes électroluminescentes pour aéronef, désigné par la référence numérique générale 1.

Un tel dispositif d'éclairage est destiné à constituer un projecteur d'atterrissage ou « landing light » ou un projecteur de décollage ou « take-off light ».

Il peut encore être utilisé en tant que projecteur de recherche et d'atterrissage pour hélicoptère.

Dans l'exemple de réalisation envisagé, le dispositif 1 est un projecteur de format « PAR 64 ».

Bien entendu, on ne sort pas du cadre de l'invention lorsque le projecteur adopte tout autre format. Ainsi, d'autres variantes, notamment en termes de nombre de diodes, d'éléments réflecteurs, de diamètres de projecteurs, de caractéristiques du faisceau émis, ou d'agencement ou de forme du corps et du réflecteur peuvent également être envisagés.

Le dispositif d'éclairage comporte ici un corps 2 comprenant une face avant 3 tournée dans la direction d'émission de la lumière et une face postérieure opposée 4.

Le corps 2 a une forme de cylindre creux fermé par un fond 5 du côté de la face postérieure 4 et présentant ici un diamètre de 203 mm.

Le corps cylindrique comporte intérieurement un support 6 sur lequel sont montées un ensemble de diodes 7.

Dans divers modes de réalisation, le support peut présenter diverses formes. Dans le mode de réalisation des figures 1 et 2, le support cylindrique est à base polygonale et présente une forme globalement annulaire.

Le support annulaire comporte une paroi interne 8 cylindrique, une face externe polygonale 9 sur laquelle sont montées les diodes 7, se prolongeant, vers l'avant, par un bord cylindrique 10 d'extrémité.

Le contour polygonal du support, ici octogonal, constitue la zone de montage des LEDs. Chaque côté du support polygonal comporte ici cinq diodes montées sur un circuit imprimé, de préférence un circuit imprimé à substrat métallique isolé (ou SMI) particulièrement adapté pour recevoir des diodes de puissance.

Dans l'exemple de réalisation représenté, chaque côté du support polygonal reçoit cinq diodes de sorte que le dispositif comporte 40 diodes régulièrement réparties autour du support polygonal.

Par ailleurs, entre la paroi périphérique externe du support et le corps 3, le dispositif comporte 8 réflecteurs 11 constitués de plusieurs ensembles d'éléments réflecteurs juxtaposés se positionnant chacun sur un des côtés polygonal du support.

Les éléments réflecteurs sont constitués par des portions de miroir de révolution, typiquement paraboliques, et sont chacun disposés en regard d'une diode électroluminescente.

Enfin, une glace annulaire 13, transparente à la lumière, est fixée sur le corps 3 et dans une gorge pratiquée dans le bord cylindrique d'extrémité 10 du support, sur le trajet des faisceaux lumineux émis par les diodes et réfléchis par les éléments réflecteurs.

Enfin, les diodes électroluminescentes sont alimentées par une carte électronique 14 d'alimentation, ici annulaire, fixée sur le support, qui vient se loger entre la face externe de la paroi cylindrique interne et la face interne de la paroi polygonale du support.

Comme on le conçoit, le montage des diodes dans le corps cylindrique de manière radiale sur un support à contour polygonal et l'utilisation d'une glace annulaire permettent de dégager un logement L au centre du dispositif d'éclairage.

En outre, le support polygonal peut comporter une face antérieure 15 fermée conformée de manière à constituer un radiateur capable d'évacuer l'énergie thermique dégagée par les diodes et par la carte électronique d'alimentation lors du fonctionnement du dispositif.

Le positionnement d'un radiateur en face avant est en effet avantageux dans la mesure où cette face est souvent exposée aux éléments extérieurs et est dès lors bien refroidie.

Dans le logement L, le dispositif comporte un ou plusieurs équipements additionnels 17 capable d'exercer des fonctions supplémentaires.

Il peut s'agir d'un capteur, d'un radar ou d'une caméra. Dans ce cas, la carte électronique d'alimentation pourra être prévue, notamment programmée, pour assurer également les fonctions de pilotage d'un tel équipement additionnel.

Comme on le voit, cet équipement est recouvert d'une glace G transparente à la lumière ou, de manière générale à un rayonnement, notamment un rayonnement électromagnétique, émis et/ou détecté par l'équipement ou par les équipements installés dans le logement L. Avantageusement cette glace peut être dotée de moyens de dégivrage, de type classique en eux-mêmes.

On notera que la présence des équipements 17 est optionnelle. En leur absence, la carte électronique peut être cylindrique et la face antérieure 15 formant le radiateur peut avoir une forme de disque.

On notera que le support sur lequel sont montés les circuits imprimés SMI est fixé sur le corps. Par ailleurs, le radiateur prévu en face avant du support polygonal est réalisé dans la même pièce que ce dernier. On obtient ainsi un couplage thermique efficace entre les diodes, l'équipement additionnel 17 et le radiateur.

Les éléments réflecteurs ne participent pas à l'évacuation de la chaleur dégagée par les diodes de sorte qu'ils peuvent être réalisés en matière plastique injectée métallisée. Il s'agit par exemple d'une matière plastique injectée recouverte d'une couche d'aluminium réfléchissant la lumière.

Toutefois, comme le montrent les figures 1 et 2, on pourra également prévoir, en face arrière, un deuxième radiateur 18 réalisé dans le corps 3.

Dans un mode de réalisation, les modules lumineux prévus sur chaque face du support polygonal sont tous identiques.

Pour chaque module prévu sur l'une des faces du support polygonal, comme indiqué précédemment, on prévoira par exemple cinq diodes. Il peut par exemple s'agir de diodes capables de délivrer une intensité lumineuse de 270 lumens lorsqu'elles sont alimentées à 1000 mA.

En ce qui concerne le réflecteur, pour un dispositif d'éclairage comprenant un support polygonal de 130 mm de côté, le réflecteur présente également une forme globalement polygonale comprenant ici huit modules identiques correspondant chacun à un module d'éclairage à LED. Chaque module réflecteur comporte cinq éléments réflecteurs, ici paraboliques, ayant une focale de 4 mm, une hauteur de 21 mm et une profondeur de 26,5 mm. Bien entendu, on positionnera les diodes de façon qu'elles soient chacune au foyer d'un réflecteur.

Il a été constaté qu'un tel dispositif d'éclairage est capable de délivrer un pic d'intensité de l'ordre de 730 000 candelas et un champ circulaire de +/- 4,65° à 73 000 candelas soit 10% du pic d'intensité. Le flux dans le champ utile est de 5740 lumens pour 10 800 lumens émis, soit un rendement optique de 53% en considérant un réflecteur ayant un coefficient de réflexion de 85%.

Les diodes électroluminescentes ont une puissance de 3 watts et une zone émettrice de 1 mm².

On notera enfin que les projecteurs d'atterrissage ou de décollage produisent généralement un faisceau ovalisé ayant une ouverture typique de 12° x 8° (+/-6° x +/-4°) considéré à 10% de l'intensité maximale.

Comme le montre la figure 1, on pourra prévoir que deux éléments réflecteurs E1 et E2 diamétralement opposés et s'étendant selon une ligne horizontale sont montés de manière inclinée par rapport à la direction d'éclairage du dispositif et basculés de quelques degrés, par exemple de 3° vers l'extérieur afin que l'axe de ces éléments réflecteurs diverge. Grâce à cette caractéristique, le dispositif présente un champ circulaire elliptique de 11,2° x 9° (plus ou moins 5,6° x plus ou moins 4,5°) à 62 000 candelas, soit 10% du pic d'intensité, ici à 620 000 candelas. Le flux dans le champ utile est de 5640 lumens pour 10 800 lumens émis, soit un rendement optique de 52% en considérant un réflecteur ayant un coefficient de réflexion de 85%.

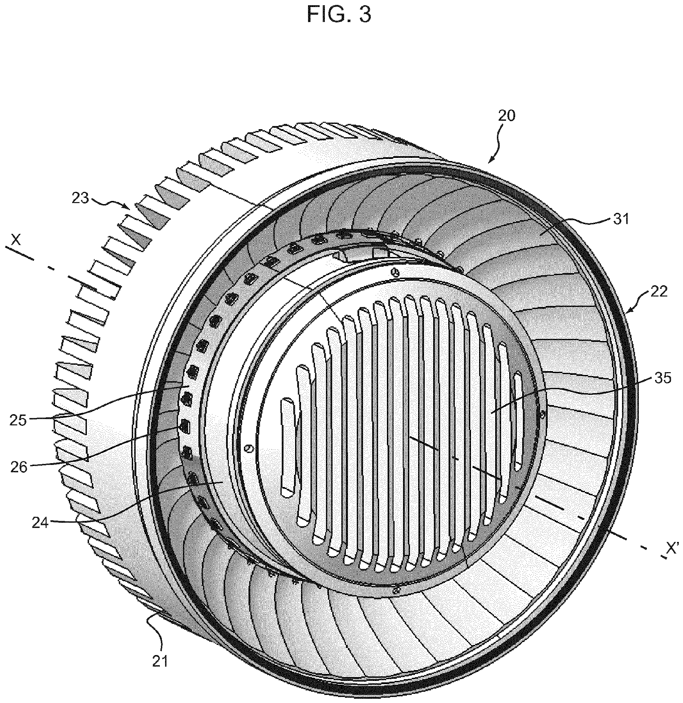

On va maintenant décrire en référence aux figures 3 à 5 un deuxième mode de réalisation d'un dispositif d'éclairage 20 conforme à l'invention.

Le projecteur 20 illustré sur ces figures comporte également un corps cylindrique 21 d'axe X-X' de diamètre extérieur 145 mm de sorte que le projecteur est ici de taille PAR 46. Il comporte une face avant 22, par laquelle le faisceau lumineux est délivré par le projecteur, et une face arrière opposée 23.

Le corps 21 comporte un support annulaire 24 réalisé sous la forme d'un cylindre creux autour duquel est enroulé un circuit imprimé 25 comportant un ensemble de diodes électroluminescentes 26 disposées radialement, c'est-à-dire orientées perpendiculairement à l'axe X-X' du corps 21.

Par exemple, le circuit imprimé 25 peut comporter 40 diodes électroluminescentes 26 régulièrement réparties autour du support 24.

Dans divers modes de réalisation, le circuit imprimé peut être flexible. En variante, il peut être non flexible, en étant conformé de manière à s'adapter au diamètre du support annulaire 24.

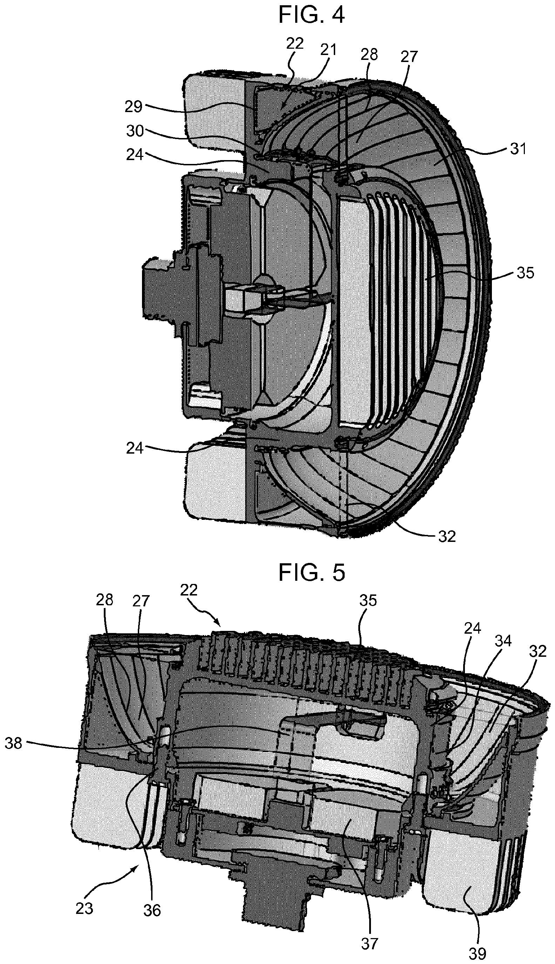

Comme le montre la figure 4, au niveau de la face avant 22, le corps comporte un logement 27 délimité intérieurement par le support 24, extérieurement par une paroi périphérique 28 et par un fond 29.

Comme on le voit, le fond 29 comporte au voisinage du support 24 une gorge 30 dans laquelle viennent se loger un ensemble d'éléments réflecteurs paraboliques juxtaposés, tels que 31, disposés en couronne et placés chacun en regard d'une diode 26 de sorte que chaque diode 26 soit placée au foyer d'un élément réflecteur.

Les éléments réflecteurs juxtaposés 31 constituent conjointement un réflecteur qui reçoit le rayonnement émis par les diodes électroluminescentes pour le diriger selon la direction d'éclairage, c'est-à-dire parallèlement à l'axe X-X'.

Comme on le voit sur les figures 3 et 4, une glace annulaire 32 transparente à la lumière est placée sur le trajet du faisceau renvoyé par le réflecteur.

On constate que le montage des diodes électroluminescentes sur un support annulaire, le montage en couronne des éléments réflecteurs 31 et l'utilisation d'une glace 32 annulaire permettent de libérer au centre du corps un espace libre dans lequel est placé le support annulaire, lequel comporte une paroi 34 globalement cylindrique et une paroi transversale d'extrémité 35 qui constitue un radiateur facilitant la dissipation de la chaleur générée par les DEL.

Le support annulaire 24 est fixé au corps par des vis, telles que 36. Il constitue une cloche sous laquelle est placée une carte électronique 37 d'alimentation des diodes 26, elle-même raccordée à une nappe de conducteurs 38, de sorte que cette carte d'alimentation 37 est également en relation d'échange thermique avec le radiateur 35.

Le corps 21 est également pourvu, sur sa face arrière 23, d'un deuxième radiateur 39 qui contribue également à la dissipation de la chaleur générée par les DEL.

Toutefois, la présence du radiateur 35 sur la face avant 22 du projecteur est avantageuse dans la mesure où cette face est généralement exposée aux éléments extérieurs et est dès lors efficacement refroidie.

Par ailleurs, l'agencement en couronne des éléments réflecteurs et des diodes permet de densifier les diodes et de créer ainsi un projecteur de très forte intensité et ce dans un encombrement réduit. Il a été notamment constaté qu'un tel projecteur ayant un format PAR 46 permet d'obtenir une intensité de l'ordre de 450 000 à 600 000 candelas.

Dans un mode de réalisation, le projecteur décrit en référence aux figures 3 à 5 comporte un réflecteur constitué de 40 secteurs de miroirs paraboliques de révolution de focale égale à 4mm. Les axes des 40 miroirs sont à 47 mm de l'axe principal du projecteur. Chaque secteur de miroir couvre un angle de 9°. Le projecteur comporte 40 diodes électroluminescentes disposées chacune au foyer de l'un des 40 secteurs de miroir. Le réflecteur composé des 40 secteurs de miroirs a un diamètre de 136 mm, soit un rayon de 21 mm pour chacune des paraboles de révolution. Un tel projecteur permet d'obtenir un pic d'intensité de 600 000 candelas, un champ circulaire de +/- 5° à 60 000 candelas. Le flux dans le champ utile est de 5200 lumens pour 10800 lumens émis, soit un rendement optique de 48% en considérant un réflecteur ayant un coefficient de réflexion de 90%.

En outre, la diminution du diamètre frontal du projecteur obtenue grâce à la disposition particulière des diodes et des éléments réflecteurs permet, dans le cas de l'utilisation d'un projecteur dans un système d'éclairage pour avion, de loger ces projecteurs dans le bord d'attaque des ailes en ayant une fenêtre transparente de taille limitée.

La réduction de la taille du projecteur facilite également le montage d'un projecteur de format PAR 46 à bord d'un hélicoptère pour constituer un projecteur de recherche, tout en ayant des performances similaires à celles d'un projecteur de format PAR 64.

Par ailleurs, lorsque le corps 21 comporte une taille suffisante de sorte que la dissipation réalisée à l'arrière par le deuxième radiateur 39 est suffisante, le premier radiateur 35 prévu en face avant sur le support annulaire 24 peut être omis. Comme dans le mode de réalisation des figures 1 et 2, l'espace libéré au centre du boîtier peut alors être utilisé pour y installer un ou plusieurs autres organes d'exécution d'une fonction additionnelle.

Il peut par exemple s'agir d'installer des organes assurant d'autres fonctions d'éclairage.

Il peut également s'agir d'installer au centre du support annulaire divers types de capteurs, voire une caméra ou un radar, de manière à permettre à un pilote de détecter des obstacles, par exemple lors du décollage.

On notera qu'on prévoira avantageusement, pour les éléments réflecteurs 31, des miroirs paraboliques dont la focale est adaptée pour utiliser des DEL ayant une zone émettrice de 0,5 à 4mm², ce qui permet d'améliorer le flux lumineux puisque de telles diodes ont généralement un rendement amélioré. On pourra par exemple utiliser des diodes ayant une puissance de 1 à 10W. On notera par ailleurs que les éléments réflecteurs 31 ne sont pas nécessairement métalliques car, grâce notamment à la présence du support annulaire 24 qui porte le radiateur 35, ces éléments réflecteurs 31 ne participent pas à la dissipation thermique car ils ne sont pas en contact avec l'air extérieur. On pourra à cet égard, par exemple, utiliser des éléments réflecteurs 31 constitués par des miroirs en matière plastique injectée recouverts d'une couche d'aluminium réfléchissant, ce qui permet un gain en termes de poids.

## Revendications

1. Dispositif d'éclairage d'aéronef, comprenant un corps creux cylindrique (2 ; 21), un ensemble de diodes électroluminescentes (7 ; 26) montées dans le corps creux cylindrique (2 ; 21) et au moins un réflecteur (11 ; 31) recevant les faisceaux lumineux émis par les diodes électroluminescentes (7 ; 26) et adapté pour diriger les faisceaux lumineux selon la direction d'éclairage du dispositif, les diodes électroluminescentes (7 ; 26) sont montées sur un support cylindrique annulaire (6 ; 24) et au moins un organe (17) d'exécution d'une fonction additionnelle est monté au centre du support cylindrique annulaire (6 ; 24), l'organe (17) d'exécution de la fonction additionnelle est choisi parmi une caméra, un radar ou un capteur,
**caractérisé en ce que**
les diodes électroluminescentes (7 ; 26) sont disposées de manière radiale dans le corps creux cylindrique (2 ; 21), ledit support annulaire cylindrique (6 ; 24) étant de plus à contour polygonal.

2. Dispositif selon la revendication 1, dans lequel chaque côté du support cylindrique à contour polygonal comporte plusieurs diodes (7 ; 26).

3. Dispositif selon la revendication 1, dans lequel ledit organe est recouvert d'une glace (G) transparente à la lumière.

4. Dispositif selon la revendication 3, dans lequel la glace est équipée de moyens de dégivrage.

5. Dispositif selon l'une quelconque des revendications 1 à 3, dans lequel le support comporte une face antérieure (22) comprenant un radiateur (35) de dissipation d'énergie thermique, ledit radiateur étant annulaire ou en forme de disque.

6. Dispositif selon l'une quelconque des revendications 1 à 5, dans lequel les diodes sont montées sur au moins un circuit imprimé fixé sur le support.

7. Dispositif selon l'une quelconque des revendications 1 à 6, comprenant une carte électronique (14 ; 37) d'alimentation des diodes montée dans le corps.

8. Dispositif selon l'une quelconque des revendications 1 à 7, comprenant en outre une glace annulaire (13 ; 32) recouvrant de manière étanche les diodes et le réflecteur.

9. Dispositif selon l'une quelconque des revendications 1 à 8, dans lequel le corps comporte une face postérieure comprenant un radiateur de dissipation d'énergie thermique.

10. Dispositif selon l'une quelconque des revendications 1 à 9, comportant un ensemble d'éléments réfléchissant de révolution juxtaposés (11 ; 31) ayant une génératrice typiquement parabolique.

11. Dispositif selon la revendication 10, dans lequel chaque diode est associée à un élément réfléchissant.

12. Dispositif selon l'une des revendications 10 et 11, comprenant des éléments réflecteurs montés de manière inclinée par rapport à la direction d'éclairage du dispositif.

13. Dispositif selon l'une quelconque des revendications 1 à 12, dans lequel les éléments réflecteurs sont en matière plastique injectée recouverte d'une couche d'aluminium réfléchissant la lumière.

## Patentansprüche

1. Luftfahrzeug-Beleuchtungsvorrichtung, die einen zylindrischen Hohlkörper (2; 21), eine Einheit von in den zylindrischen Hohlkörper (2; 21) montierten Elektrolumineszenzdioden (7; 26) und mindestens einen Reflektor (11; 31) enthält, der die von den Elektrolumineszenzdioden (7; 26) emittierten Lichtstrahlen empfängt und geeignet ist, die Lichtstrahlen gemäß der Beleuchtungsrichtung der Vorrichtung zu lenken, wobei die Elektrolumineszenzdioden (7; 26) auf einen ringförmigen zylindrischen Träger (6; 24) montiert sind, und mindestens ein Organ (17) zur Ausführung einer zusätzlichen Funktion in die Mitte des ringförmigen zylindrischen Trägers (6; 24) montiert ist, wobei das Organ (17) zur Ausführung der zusätzlichen Funktion aus einer Kamera, einem Radar oder einem Sensor ausgewählt wird,
**dadurch gekennzeichnet, dass** die Elektrolumineszenzdioden (7; 26) radial im zylindrischen Hohlkörper (2; 21) angeordnet sind, wobei der zylindrische ringförmige Träger (6; 24) außerdem einen polygonalen Umriss hat.

2. Vorrichtung nach Anspruch 1, wobei jede Seite des zylindrischen Trägers mit polygonalem Umriss mehrere Dioden (7; 26) aufweist.

3. Vorrichtung nach Anspruch 1, wobei das Organ mit einer für Licht durchlässigen Glasscheibe (G) bedeckt ist.

4. Vorrichtung nach Anspruch 3, wobei die Glasscheibe mit Enteisungseinrichtungen ausgerüstet ist.

5. Vorrichtung nach einem der Ansprüche 1 bis 3, wobei der Träger eine Vorderseite (22) aufweist, die einen Kühlkörper (35) zur Ableitung thermischer Energie enthält, wobei der Kühlkörper ring- oder scheibenförmig ist.

6. Vorrichtung nach einem der Ansprüche 1 bis 5, wobei die Dioden auf mindestens eine am Träger befestigte Leiterplatte montiert sind.

7. Vorrichtung nach einem der Ansprüche 1 bis 6, die eine in den Körper montierte Elektronikkarte (14; 37) zur Versorgung der Dioden enthält.

8. Vorrichtung nach einem der Ansprüche 1 bis 7, die außerdem eine ringförmige Glasscheibe (13; 32) enthält, die die Dioden und den Reflektor dicht bedeckt.

9. Vorrichtung nach einem der Ansprüche 1 bis 8, wobei der Körper eine Rückseite aufweist, die einen Kühlkörper zur Ableitung thermischer Energie enthält.

10. Vorrichtung nach einem der Ansprüche 1 bis 9, die eine Einheit von nebeneinander angeordneten, drehsymmetrischen Reflektorelementen (11; 31) aufweist, die eine typischerweise parabelförmige Mantellinie haben.

11. Vorrichtung nach Anspruch 10, wobei jede Diode einem Reflektorelement zugeordnet ist.

12. Vorrichtung nach einem der Ansprüche 10 und 11, die Reflektorelemente enthält, welche bezüglich der Beleuchtungsrichtung der Vorrichtung geneigt montiert sind.

13. Vorrichtung nach einem der Ansprüche 1 bis 12, wobei die Reflektorelemente aus Spritzkunststoff sind, der mit einer das Licht reflektierenden Aluminiumschicht bedeckt ist.

## Claims

1. Aircraft Lighting device, comprising a hollow cylindrical body (2; 21), a set of light emitting diodes (7; 26) mounted in the hollow cylindrical body (2; 21) and at least one reflector (11; 31) receiving the light beams emitted by the light emitting diodes (7;26) and designed to direct the light beams in the lighting direction of the device, the light emitting diodes (7;26) are mounted on an annular cylindrical support (6; 24), and at least one device (17) for executing an additional function mounted at the centre of the annular cylindrical support (6;24), the device for executing the additional function is chosen from among a camera, a radar or a sensor, **characterized in that** the light emitting diodes (7;26) are disposed radially in the hollow cylindrical body (2;21), the said annular cylindrical support (6;24) being moreover with a polygonal contour.

2. Device according to Claim 1, **characterized in that** each side of the cylindrical support with a polygonal contour comprises several diodes (7; 26).

3. Device according to Claim 1, **characterized in that** the said device is covered by a glass (G) that is transparent to light.

4. Device according to Claim 3, **characterized in that** the glass is equipped with de-icing means.

5. Device according to any one of Claims 1 to 3, **characterized in that** the support comprises a front face (22) comprising a radiator (35) for dissipating thermal energy, the said radiator being annular or disk-shaped.

6. Device according to any one of Claims 1 to 5, **characterized in that** the diodes are mounted on at least one printed circuit fixed onto the support.

7. Device according to any one of Claims 1 to 6, comprising an electronic card (14; 37) for powering the diodes mounted in the body.

8. Device according to any one of Claims 1 to 7, comprising moreover an annular glass (13; 32) covering the diodes and the reflector in a sealed manner.

9. Device according to any one of Claims 1 à 8, **characterized in that** the body comprises a rear face comprising a radiator for the dissipation of thermal energy.

10. Device according to any one of Claims 1 to 9, comprising a set of juxtaposed reflecting elements of revolution juxtaposed (11; 31) having a typically parabolic generatrix.

11. Device according to Claim 10, **characterized in that** each diode is associated with a reflecting element.

12. Device according to one of Claims 10 and 11, comprising reflector elements mounted such that they are inclined with respect to the lighting direction of the device.

13. Device according to any one of Claims 1 to 12, **characterized in that** the reflector elements are made of injection moulded plastic covered with a layer of light-reflecting aluminium.
